# FASCICULE DE BREVET EUROPEEN

(11) **EP 0 787 266 B1**
(45) Date de publication et mention de la délivrance du brevet: **08.04.1998**
(21) Numéro de dépôt: 95936619.6
(22) Date de dépôt: 27.10.1995
(51) Int. Cl.: F16F 13/14

(54) **SUPPORT ANTIVIBRATOIRE HYDRAULIQUE**
SCHWINGUNGSDÄMPFENDE, HYDRAULISCHE STÜTZE
HYDRAULIC VIBRATION-DAMPING MOUNTING

(30) Priorité: 27.10.1994 FR 9412889
(43) Date de publication de la demande: 06.08.1997
(73) Titulaire: HUTCHINSON, F-75008 Paris (FR)
(72) Inventeur: BELLAMY, Alain, F-41100 Naveil (FR); REH, Denis, F-28200 Chateaudun (FR); PETIT, Pascal, F-28200 Chateaudun (FR)
(74) Mandataire: Burbaud, Eric
(86) Numéro de dépôt international: FR9501425
(87) Numéro de publication internationale: WO9613675

(56) Documents cités:
- EP-A- 0 012 638
- EP-A- 0 172 700
- EP-A- 0 236 199
- EP-A- 0 342 680
- EP-A- 0 556 076
- EP-A- 0 646 735
- FR-A- 2 622 269
- GB-A- 2 200 190
- GB-A- 2 207 214
- PATENT ABSTRACTS OF JAPAN vol. 12 no. 437 (M-765) [3284] ,17 Novembre 1988 & JP,A,63 172036 (NISSAN MOTOR CO. LTD.) 15 Juillet 1988,
- PATENT ABSTRACTS OF JAPAN vol. 8 no. 140 (M-305) [1577] ,29 Juin 1984 & JP,A,59 037348 (TOUKAI GOMU KOGYO K.K.) 29 Février 1984,

## Description

L'invention concerne les supports antivibratoires hydrauliques destinés à être interposés, aux fins d'amortissement et de liaison, entre deux éléments rigides tels qu'un châssis et un moteur de véhicule, pour amortir des mouvements vibratoires entre ces deux éléments rigides, essentiellement selon une direction principale de vibration.

Plus particulièrement, l'invention a pour objet un support antivibratoire de ce type, comportant une première et une deuxième armatures rigides solidarisables respectivement avec les deux éléments rigides à réunir, et un corps en élastomère qui présente une paroi épaisse reliant entre elles les deux armatures rigides et délimitant partiellement une chambre de travail, cette paroi épaisse présentant sensiblement une forme de cloche qui s'étend selon la direction principale de vibration entre d'une part une base périphérique solidaire de la deuxième armature et d'autre part un sommet solidaire de la première armature, ce corps en élastomère comportant en outre une paroi mince librement déformable qui est formée d'une seule pièce avec la paroi épaisse susmentionnée et qui délimite partiellement une chambre de compensation communiquant avec la chambre de travail par un canal étroit, les deux chambres et le canal étroit étant remplis d'un liquide, la deuxième armature étant une plaque de base qui s'étend selon un plan général sensiblement perpendiculaire à la direction principale de vibration et qui présente une face dite de support, solidarisée de façon étanche avec le corps en élastomère pour délimiter avec celui-ci les deux chambres et le canal étroit.

Un tel dispositif est décrit par exemple dans le document EP-A-0 236 199.

Toutefois, le dispositif décrit dans ce document ne comporte pas de clapet de découplage, permettant de filtrer les vibrations de faible amplitude et de relativement haute fréquence entre les deux armatures rigides.

La présente invention a notamment pour but de proposer un support antivibratoire hydraulique du genre en question qui présente un clapet de découplage et qui néanmoins reste simple et peu coûteux.

A cet effet, selon l'invention, un support antivibratoire hydraulique du genre en question est essentiellement caractérisé en ce que sa plaque de base est évidée par un trou en communication avec l'atmosphère en regard de la chambre de travail, ce trou étant obturé de façon étanche par une membrane souple en élastomère dont le pourtour est intimement adhérisé sur le bord du trou, cette membrane étant armée par une toile en matériau indéformable propre à limiter l'amplitude de ses débattements.

Dans des modes de réalisation avantageux, on a recours en outre à l'une et/ou à l'autre des dispositions suivantes :
- la membrane est conformée de façon telle que ses déformations soient limitées par arc-boutement au-delà d'un seuil prédéterminé,
- le bord du trou est conformé, notamment par biseautage, de façon à former un siège de réception non purement cylindrique pour la membrane,
- la périphérie de la membrane est prolongée par au moins une lèvre propre coiffer le bord du trou.

D'autres caractéristiques et avantages de l'invention apparaîtront au cours de la description suivante de plusieurs de ses formes de réalisation données à titre d'exemples non limitatifs, en regard des dessins joints.

Sur les dessins :
- la figure 1 est une vue en coupe d'une forme de réalisation de l'invention, la coupe étant prise selon la ligne I-I de la figure 2,
- la figure 2 est une vue en coupe selon la ligne II-II de la figure 1,
- la figure 3 est une vue de dessous du dispositif des figures 1 et 2,
- les figures 4 et 5 montrent semblablement à la figure 2, mais à échelle agrandie, respectivement deux variantes d'un détail de cette figure,

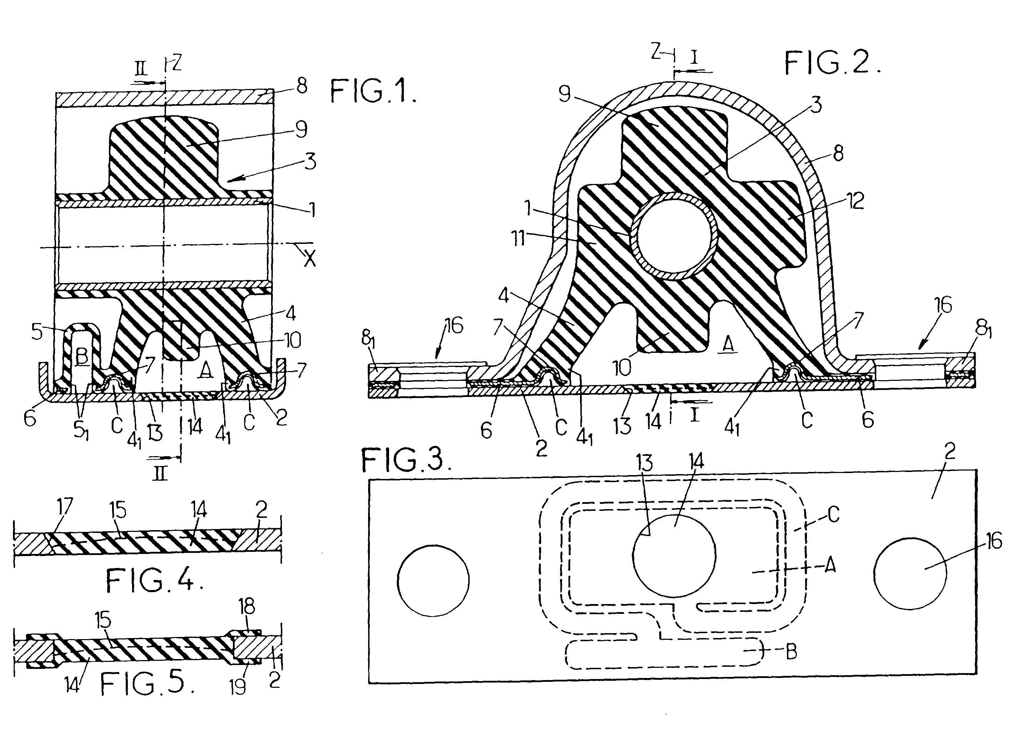

Le support antivibratoire représenté sur les figures 1 à 3 comporte deux armatures métalliques rigides 1 et 2 qui sont reliées entre elles par un corps en élastomère 3.

La première armature 1 est tubulaire dans l'exemple représenté, et présente un axe longitudinal X. De façon plus générale, la première armature 1 peut avoir la forme d'un organe allongé plein ou creux, de section circulaire ou non.

La deuxième armature 2, quant à elle, est une plaque appelée ci-après plaque de base, qui présente une forme générale plane au moins par morceaux, et qui s'étend parallèlement à l'axe X de la première armature.

Le corps en élastomère 3 est solidarisé avec la première armature 1 par vulcanisation. Il comporte une paroi épaisse 4 sensiblement en forme de cloche, qui s'étend depuis un sommet solidaire de la première armature 1 jusqu'à une base périphérique solidaire de la plaque de base 2, selon une direction Z dans laquelle on souhaite amortir des mouvements vibratoires entre les deux armatures. La direction Z est perpendiculaire à l'axe X et au plan général de la plaque de base 2, et elle peut être par exemple verticale.

La paroi épaisse 4 présente une résistance à la compression suffisante pour supporter une charge appliquée à la première armature 1 parallèlement à l'axe Z et dirigée vers la plaque de base. Cette charge peut être par exemple supérieure à 15 kg et est en général très supérieure.

La base périphérique 4₁ de la paroi épaisse 4 est solidarisée de façon étanche avec la plaque de base 2, en délimitant ainsi une chambre de travail A. Dans l'exemple représenté, la chambre A présente une section horizontale rectangulaire, mais elle pourrait avoir d'autres formes, notamment à section horizontale circulaire ou ovale.

Par ailleurs, le corps en élastomère 3 comporte une paroi mince 5, souple, qui est juxtaposée à la paroi épaisse 4, et qui présente une forme de cloche, avec une base périphérique 5₁ qui est également solidarisée de façon étanche avec la plaque de base 2, en délimitant ainsi une chambre de compensation B.

Cette chambre B présente une section horizontale rectangulaire dans l'exemple représenté, mais elle pourrait présenter une forme différente.

Les deux chambres A et B communiquent par l'intermédiaire d'un canal étroit C, qui a la forme d'une gorge creusée dans la face du corps en élastomère 3 qui est appliquée contre la plaque de base 2, les bords de la gorge étant en contact étanche contre la plaque de base 2.

Les parois 4 et 5 ne présentent pas de partie commune entre les chambres A et B, en dehors de la liaison entre leurs bases 4₁ et 5₁.

Dans l'exemple représenté, le corps en élastomère 3 est surmoulé sur une plaque métallique ajourée 6, disposée sur la face du corps en élastomère qui est en contact avec la plaque de base 2. Ainsi, la plaque de base 2 peut être solidarisée avec le corps en élastomère par sertissage de ladite plaque de base 2 sur ladite plaque ajourée 6.

En outre, la plaque ajourée 6 comporte une gorge ou gouttière 7 qui détermine la forme du canal étroit C, avec une grande précision.

Le support antivibratoire des figures 1 à 3 comporte en outre un arceau 8 métallique qui est fixé de façon rigide à la plaque de base 2. L'arceau 8 entoure la première armature 1 et le corps en élastomère 3, et il s'étend parallèlement à l'axe X.

Dans l'exemple représenté, l'arceau 8 est une plaque pliée, qui recouvre la totalité du corps en élastomère, de façon à le protéger contre les chocs de corps extérieurs. Ceci est avantageux dans la mesure où la paroi mince 5 est fragile et exposée à côté de la paroi épaisse 4.

L'arceau 8 comporte deux prolongements latéraux 8₁, respectivement de chaque côté du corps en élastomère 3. Ces prolongements latéraux recouvrent chacun une partie de la plaque ajourée 6, qui elle-même recouvre la deuxième armature. De plus, ces trois éléments sont traversés par un perçage 16 au niveau de chaque prolongement 8₁.

Ces perçages 16 permettent de fixer le support antivibratoire sur une pièce rigide, au moyen de vis ou de boulons (non représentés), en complétant en outre la solidarisation des différentes parties du support antivibratoire par serrage des prolongements 8₁ sur la plaque 6 et la deuxième armature 2.

Le corps en élastomère 3 comporte un premier bossage 9, qui s'étend parallèlement à la direction Z à partir de la première armature 1, en direction opposée à la plaque de base 2. Ce bossage 9 est adapté à buter contre la partie supérieure de l'arceau 8, en limitant ainsi le déplacement de la première armature en éloignement par rapport à la plaque de base 2.

Le corps en élastomère 3 comporte en outre un deuxième bossage 10, qui s'étend à partir de la première armature 1 vers la plaque de base 2, parallèlement à l'axe Z, et qui pénètre dans la chambre de travail A. Ce deuxième bossage 10 est adapté à buter contre la plaque de base 2 en limitant ainsi le déplacement de la première armature vers la plaque de base.

Enfin, le corps en élastomère comporte des bossages latéraux 11, 12 sensiblement diamétralement opposés par rapport à la première armature 1, qui sont adaptés à buter contre l'arceau 8 lorsque la première armature est déplacée sensiblement perpendiculairement à l'axe X et à la direction Z.

Les chambres A et B, ainsi que le canal étroit C, sont remplis de liquide. Lorsque les deux armatures 1 et 2 subissent des mouvements relatifs de vibration, la paroi épaisse 4 du corps en élastomère se déforme, ce qui provoque des variations de volume de la chambre de travail A. Ces variations de volume entraînent des transferts de liquide entre les chambres A et B, par l'intermédiaire du canal étroit C, les variations de volume de la chambre de travail A étant compensées par des variations complémentaires de la chambre de compensation B, dont la paroi mince 5 est facilement déformable.

Au voisinage d'une certaine fréquence, qui est généralement inférieure à 20 hertz et qui dépend essentiellement des dimensions du canal étroit C et de la masse volumique du liquide en mouvement dans ledit canal étroit, il se produit dans le canal étroit C un phénomène de résonance qui, en liaison avec les pertes de charge dans ledit canal étroit, provoque un fort amortissement des vibrations entre les deux armatures 1 et 2.

Le support antivibratoire comporte en outre un clapet de découplage, destiné à amortir les vibrations de faible amplitude, par exemple inférieure à 0,5 mm, et de fréquence relativement élevée, par exemple supérieure à 20 hertz.

A cet effet, la plaque de base 2 est percée d'un trou 13 en regard de la chambre de travail A, et ce trou 13 est obturé de façon étanche par une membrane souple 14 qui sépare la chambre de travail A de l'atmosphère ambiante.

Cette membrane souple 14 est réalisée en élastomère et son pourtour est intimement adhérisé sur le bord du trou 30.

Cette adhérisation est effectuée de préférence à chaud et sous pression, par vulcanisation sur place d'une ébauche de membrane en élastomère cru.

Elle assure une liaison mécanique extrêmement solide et rigoureusement étanche entre la membrane et la plaque, ainsi qu'il est requis pour éviter toute fuite dans l'atmosphère du liquide intérieur au support.

En particulier, il ne serait pas assez sûr d'adopter ici pour la fixation de la membrane les simples pincements ou serrages antérieurement connus.

Pour limiter l'amplitude des déformations de la membrane, on noie avantageusement dans celle-ci une toile inextensible 15, des mesures étant prises pour que, au repos, cette toile ne présente pas une forme rigoureusement plane, de façon à lui réserver une petite marge de déformation avant d'occuper son état inextensible.

On peut également dans le même but de limiter l'amplitude des déformations de la membrane, conformer celle-ci de façon telle que ses déformations soient limitées par arc-boutement au-delà d'un seuil prédéterminé.

Pour renforcer la solidité de l'accrochage du pourtour de la membrane 14 sur le bord du trou 13, on peut avec avantage avoir recours à l'une et/ou à l'autre des mesures suivantes :
- on donne au profil du bord du trou 13 une forme non purement cylindrique, par exemple biseautée et convergente vers l'extérieur, de façon telle que ce bord constitue un siège 17 de réception pour la membrane, la forme de ce siège s'opposant par elle-même à un détachement de la membrane vers l'extérieur sous l'effet de la pression intérieure de liquide,
- on prolonge le pourtour de la membrane par au moins une lèvre débordante 18, 19, chacune de ces lèvres coiffant une petite bande de la plaque de base 2 le long du bord du trou 13.

L'expérience montre que la présence de la membrane 14 ainsi définie permet d'amortir très efficacement les vibrations de relativement petite amplitude correspondant à des fréquences relativement élevées.

En plus la localisation de ladite membrane au sein de la plaque de base 2 permet de donner à cette membrane des dimensions relativement importantes, sa surface pouvant facilement atteindra et même dépasser 50 cm², et sa fixation par adhérisation intime présente une solidité et une étanchéité remarquables, sans qu'il soit nécessaire à cet effet de recourir à des accessoires supplémentaires tels que les grilles rigides de limitation ou les rabats de sertissage prévus dans les réalisations antérieurement connues.

## Revendications

1. Support antivibratoire hydraulique destiné à être interposé entre deux éléments rigides pour amortir des mouvements vibratoires entre ces deux éléments rigides, essentiellement selon une direction principale de vibration (Z), ce support comportant une première (1) et une deuxième (2) armatures rigides solidarisables respectivement avec les deux éléments rigides à réunir, et un corps en élastomère (3) qui présente une paroi épaisse (4) reliant entre elles les deux armatures rigides et délimitant partiellement une chambre de travail (A), cette paroi épaisse présentant sensiblement une forme de cloche qui s'étend selon la direction principale de vibration entre d'une part une base périphérique (4₁) solidaire de la deuxième armature (2) et d'autre part un sommet solidaire de la première armature (1), ce corps en élastomère comportant en outre une paroi mince (5) librement déformable qui est formée d'une seule pièce avec la paroi épaisse susmentionnée et qui délimite partiellement une chambre de compensation (B) communiquant avec la chambre de travail par un canal étroit (C), les deux chambres et le canal étroit étant remplis d'un liquide, la deuxième armature (2) étant une plaque de base qui s'étend selon un plan général sensiblement perpendiculaire à la direction principale de vibration et qui présente une face dite de support, solidarisée de façon étanche avec le corps en élastomère pour délimiter avec celui-ci les deux chambres et le canal étroit, caractérisé en ce que la plaque de base (2) est évidée par un trou (13) en communication avec l'atmosphère en regard de la chambre de travail, ce trou étant obturé de façon étanche par une membrane souple en élastomère (14) dont le pourtour est intimement adhérisé sur le bord du trou, cette membrane étant armée par une toile (15) en matériau indéformable propre à limiter l'amplitude de ses débattements.

2. Support selon la revendication 1, caractérisé en ce que la membrane (14) est conformée de façon telle que ses déformations soient limitées par arc-boutement au-delà d'un seuil prédéterminé.

3. Support selon l'une quelconque des précédentes revendications, caractérisé en ce que le bord du trou (13) est conformé, notamment par biseautage, de façon à former un siège de réception (17) non purement cylindrique pour la membrane.

4. Support selon l'une quelconque des précédentes revendications, caractérisé en ce que la périphérie de la membrane (14) est prolongée par au moins une lèvre (18, 19) propre à coiffer le bord du trou (13).

## Patentansprüche

1. Schwingungsdämpfende hydraulische Stützvorrichtung, welche zur Dämpfung von im wesentlichen in einer Hauptschwingungsrichtung (Z) zwischen zwei steifen Elementen wirkenden Schwingungsbewegungen zwischen diesen beiden steifen Elementen angebracht wird, enthaltend eine erste steife Abdeckung (1) und eine zweite steife Abdeckung (2), welche jeweils an einem der beiden steifen, miteinander zu verbindenden Elemente befestigt sind, sowie einen Elastomerkörper (3) mit einer dickeren Wand (4), welche die beiden steifen Abdeckungen miteinander verbindet und teilweise eine Arbeitskammer (A) begrenzt, wobei diese dickere Wand im wesentlichen in Form einer Glocke ausgebildet ist, die sich entlang der Hauptschwingungsrichtung zwischen einer mit der zweiten Abdeckung (2) verbundenen Umfangsgrundplatte (4₁) auf der einen Seite und einer mit der ersten Abdeckung (1) verbundenen Spitze auf der anderen Seite erstreckt, wobei der Elastomerkörper weiterhin eine dünnere, leicht verformbare Wand (5) umfaßt, die einstückig mit der genannten dickeren Wand ausgebildet ist und teilweise eine mit der Arbeitskammer über einen engen Durchlaß (C) verbundene Kompensationskammer (B) begrenzt, und wobei die beiden Kammern und der enge Durchlaß mit einer Flüssigkeit gefüllt sind und die zweite Abdeckung (2) aus einer Grundplatte besteht, die sich entlang einer im wesentlichen senkrecht zur Hauptschwingungsrichtung verlaufenden Ebene erstreckt und eine Stützfläche aufweist, welche in abgedichteter Weise mit dem Elastomerkörper verbunden ist und zusammen mit diesem zur Begrenzung der beiden Kammern und des engen Durchlasses dient, dadurch gekennzeichnet, daß eine Öffnung (13) von der Arbeitskammer nach außen durch die als Grundplatte ausgebildete Abdeckung (2) führt und daß diese Öffnung mittels einer biegsamen, an ihrem Außenumfang am Rand der Öffnung sicher befestigten Elastomermembran (14) dicht verschlossen ist und die Membran einen zur Begrenzung ihrer Dämpfungsamplitude dienenden Einsatz (15) aus nicht verformbarem Material aufweist.

2. Stützvorrichtung nach Anspruch 1, dadurch gekennzeichnet, daß die Membran (14) derart versteift ausgestaltet ist, daß sie sich nicht über eine bestimmte Grenze hinaus verformen läßt.

3. Stützvorrichtung nach einem der vorangegangenen Ansprüche, dadurch gekennzeichnet, daß der Rand der Öffnung (13) insbesondere durch Abschrägung so ausgeformt wird, daß ein nicht vollständig zylindrischer Aufnahmesitz (17) für die Membrane entsteht.

4. Stützvorrichtung nach einem der vorangegangenen Ansprüche, dadurch gekennzeichnet, daß der Umfang der Membran durch wenigstens einen Vorsprung (18, 19) verlängert wird, welcher den Rand der Öffnung (13) überdeckt.

## Claims

1. Hydraulic antivibration support designed to be interposed between two rigid elements in order to damp vibratory motion between the two rigid elements, essentially along a main vibration direction (Z), the support comprising first and second rigid strength members (1, 2) suitable for securing to respective ones of the two rigid elements to be united, and an elastomer body (3) having a thick wall (4) interconnecting the two rigid strength members and partially defining a working chamber (A), said thick wall being substantially bell-shaped, extending along the main vibration direction between a peripheral base (4₁) secured to the second strength member (2) and a crown secured to the first strength member (1), said elastomer body further including a freely-deformable thin wall (5) which is integrally formed with the above-mentioned thick wall and which partially defines a compensation chamber (B) that is in communication with the working chamber via a narrow channel (C), the two chambers and the narrow channel being filled with a liquid, the second strength member (2) being a base plate which extends in a general plane that is substantially perpendicular to the main vibration direction and which has a "support" face secured in sealed manner with the elastomer body to cooperate therewith in defining the two chambers and the narrow channel, the hydraulic antivibration support being characterized in that the base plate (2) is pierced by a hole (13) in communication with the atmosphere and facing the working chamber, the hole being closed in sealed manner by a flexible membrane (14) made of elastomer whose periphery is intimately bonded to the rim of the hole, this membrane (14) being reinforced by a web (15) made of non-deformable material that limits the displacement amplitude thereof.

2. A support according to claim 1, characterized in that the membrane (14) is formed so that deformation thereof is limited beyond a predetermined threshold by jamming.

3. A support according to any preceding claim, characterized in that the rim of the hole (13) is shaped, in particular by bevelling, so as to provide a membrane-receiving seat (17) which is not entirely cylindrical.

4. A support according to any preceding claim, characterized in that the periphery of the membrane (14) is extended by at least one lip (18, 19) that overlaps the rim of the hole (13).
